# EUROPEAN PATENT SPECIFICATION

(11) **EP 1 917 159 B1**
(45) Date of publication and mention of the grant of the patent: **29.02.2012**
(21) Application number: 05774989.7
(22) Date of filing: 24.08.2005
(51) Int. Cl.: B60N 2/427, B60N 2/20

(54) **BACKREST MECHANISM**
RÜCKENLEHNENMECHANISMUS
MÉCANISME DE DOSSIER DE SIÈGE

(43) Date of publication of application: 07.05.2008
(73) Proprietor: AUTOLIV DEVELOPMENT AB, 447 83 Vargarda (SE)
(72) Inventor: HAGLUND, Lennart, S-447 32 Vårgårda (SE)
(74) Representative: Nilsson, Lars-Magnus
(86) International application number: PCT/SE2005/001231
(87) International publication number: WO 2007/024162

(56) References cited:
- WO-A1-00/26057
- WO-A1-00/26057
- GB-A- 2 316 442
- US-A- 5 597 205
- US-A- 6 164 720
- US-B1- 6 340 206
- US-B1- 6 340 206

## Description

### Technical area

The present invention relates to a back support mechanism for a vehicle seat, comprising, a support plate formed by part of or to be attached to a frame supporting a squab of the seat, a mounting plate formed by part of or to be attached to a back-rest of the seat, and at least one pivotal interconnection for enabling the mounting plate to pivot relative to the support plate, and thereby tilting the back-rest relative to the squab.

### Technical background

Back-rest mechanisms for a vehicle seat are well known in the art of motor vehicles. Generally a vehicle seat comprises a squab and a back rest and the back rest may carry a head rest. In later years the efforts for improving such back-rest mechanisms have been intensified, especially for reducing the injury risk for a seat occupant being subjected to a rear impact. In a rear impact the vehicle, in which the occupant is travelling is stationary or is travelling at a low velocity, and the vehicle is hit, from the rear, by another vehicle at a higher velocity. In such a situation the buttocks and torso of the occupant, which are generally in firm contact with the seat or the back rest, may be given a high acceleration. In such a situation the head of the occupant, which is normally not in contact with any part of the seat, may be given, during the first few moments of the rear impact, no acceleration at all. Consequently the buttocks and torso of the seat occupant may move forwardly, whilst, effectively, due to inertia, the head remains stationary. This causes the neck of the seat occupant to bend until the head makes contact with the head-rest, or until the neck itself applies a forward force to the head of the occupant, which may initially tend to rotate the head about a horizontal axis, and then "flick" the head forwardly. Such a movement of the head and neck can cause injuries, in short, normally called whiplash injuries.

It has been proposed, for instance in US 6,164,720, to provide a back-rest mechanism which reduces or minimizes whiplash injuries. Such back-rest mechanism is, among other components, fitted with a continuous adjustable recliner comprising a planetary gear and an additional and intermediate support plate.

In prior proposed arrangements the mechanisms utilised have been at least one of the following; complex in its construction with many components, expensive to manufacture; difficult or time consuming to handle or have possessed an undesirable degree of play or tolerance which does not provide the vehicle seat with the desired handle ability and sense of firmness and security.

Document GB-A-2316442 discloses a mechanism according to the preamble of claim 1.

### Summary of the invention

An object of the present invention is to provide an improved back support mechanism which eliminates at least some of the above problems.

This and other objects are achieved in accordance with the teachings of the present invention, wherein the back support mechanism of the kind outlined in the introduction characterises in that; said mechanism further comprising, a control element for controlling the pivoting relation between the support plate and the mounting plate, one of said plates defining a guide aperture receiving a shaft which is attached to the other plate, to permit relative movement of the shaft along the guide aperture when subjected to a predetermined force, from an initial retaining section of said aperture to at least one elongate section for performing a safety pivoting movement of the back-rest, wherein an energy absorbing element is adapted to absorb energy at least along a part of the guide aperture during said movement in the aperture, wherein the control element is adapted to allow the mounting plate to reach at least one upright back-rest position and at least a first and second predetermined tilted back-rest position.

The present invention is based on the understanding that, by using a controlled pivotal joint effectuated by the control element both for reducing the risk of whiplash injuries and for tilting the back-rest, an improved back support mechanism can be achieved in accordance of above. Thus the mechanism can be used for a seat in the second row and/or the third row of seats in a vehicle, such as a sport utility vehicle. By providing the mechanism also in such or similar seats the whiplash protection are improved also for theses occupants. However it should be noted that the mechanism may be arranged in a tiltable seat of the first row i.e. a front seat. Thus, the mechanism of course facilitates the handling of the seat and the accessibility of the vehicle by the provided first and second tilted back-rest positions.

The control element is adapted to control said pivoting relation between the mounting plate and support plate for the permitted movement of the shaft along the guide aperture in a rear impact situation and at least in one of the tilted back-rest positions.

The feature, a safety pivoting movement denotes primarily a relative pivotal movement of the mounting plate relatively to the support plate which improves the safety for the seat occupant.

The feature, a predetermined tilted back-rest position denotes primarily a specific and preset position, and secondly a secured fix position.

The feature, an upright position denotes essentially such a position a seat occupant generally uses when seated.

Preferably said control element is releasable from one of said plates by a release means for enabling said control element to reach said first tilted back-rest position, such as an easy-entry position and said second tilted back-rest position, such as a tilted essentially horizontal position. The control element is effectuated both for reducing the risk of whiplash injuries in a rear impact situation and when tilting the back-rest. The feature, releasable control element denotes a mechanically or electromechanically operated attachment. Said control element may be a link arm having a first and a second pivotal joint. The link arm is effectively adapted to permit the required pivoting relation between the mounting plate and support plate and to withstand tensioning and compressing forces in the seat.

The pivotal interconnection and said first joint may be mutually spaced and arranged in an essentially lateral direction to the link arm extent.

Preferably the support plate and the mounting plate are adapted to be secured in its pivoting relation at least in said first tilted back-rest position. Said control element can be adapted to be secured at least in said first tilted back-rest position, such as an easy entry position.

Said mechanism further comprises a yielding element to retain the shaft within the initial retaining section of the guide aperture to prevent relative movement of the support plate and the mounting plate, the yielding element being deformable when subjected to said predetermined force. For instance said yielding element is a resilient element. Alternatively said yielding element is a frangible element.

Preferably, said energy absorbing element is a deformable element, having opposite ends, each of the opposite ends of the element being connected to a respective one of said plates. Further, the opposite ends of said deformable element may be adapted to be moved apart one another, with a remaining elongation of said deformable element.

In accordance with the preferred embodiment said support plate is carrying said pivotal interconnection which comprises said shaft, as a main pivot shaft. Thus the shaft may be fast with the support plate.

The mechanism may also be associated with a head-rest moving mechanism to move the head-rest of the seat in response to a motion of the mounting plate relative to the support plate sufficient to cause deformation of the yielding element, or sufficient to cause the energy absorbing element to absorb energy.

Said release means may comprises a locking arm for locking the control element in said upright back-rest position. Further said support plate may comprises a recess adapted for receiving an engagement element of said control element for locking the control element in said upright back-rest position. Additionally said locking arm may be adapted to at least partly obstruct an orifice of said recess, when said engagement element is received in said recess. Also said locking arm may be arranged to be moved laterally of the orifice of said recess for releasing said control element.

Said locking arm may be tiltably arranged, having at least one eccentric position for locking and releasing the control element in said upright back-rest position. The feature eccentric position denotes a position wherein the locking arm is displaceably arranged and may be moveable relatively to the pivotal centre. Further said locking arm may be tiltably arranged by means of a spring action for reducing the play when the control element is locked in said upright back-rest position.

Preferably said aperture further comprising a second elongate section for permitting relative movement between said plates for moving the back-rest rearwardly relative to the squab. Said predetermined force may be corresponding to a predetermined amount of energy to permit the shaft to move in said initial retaining section, wherein said energy absorbing element being configured to absorb a substantially greater amount of energy during the subsequent rearward pivotal movement of the back-rest.

Apart from the already mentioned, other objects and advantages will be apparent to those skilled in the art from the following detailed description taken in conjunction with the appended claims and drawings.

### Brief description of the drawings

The present invention will now be described in more detail with reference to the accompanying schematic drawings which show preferred embodiments of the invention and in which:
Fig. 1 shows a perspective view of selected parts of a vehicle seat comprising a back support mechanism according to a first embodiment of the invention.
Fig. 2 shows a first perspective view of the back support mechanism in fig. 1.
Fig. 3 shows selected parts of the back support mechanism in fig. 2, seen from the first perspective view.
Fig. 4 shows selected parts of the back support mechanism in fig. 2, seen from an opposite perspective view.
Fig. 5a shows a side view of the back support mechanism in fig. 3 in an upright back-rest position.
Fig. 5b shows a side view of the back support mechanism in fig. 5a in an easy-entry position.
Fig. 5c shows a side view of the back support mechanism in fig. 5a in a tilted essentially horizontal position.
Fig. 6a shows a side view of the back support mechanism according to the first embodiment in a first and initial retained condition.
Fig. 6b shows the back support mechanism in fig. 6a in a second condition.
Fig. 6c shows the back support mechanism in fig. 6a in a third and final condition.
Fig. 7a, 7b, and 7c shows a sequence of an enlarged view of the back support mechanism in fig. 5a when being released from an upright back-rest position and guided past an easy-entry position.

### Detailed description of a preferred embodiment

Preferred embodiments of the invention will be described in the following. The embodiments described should not be regarded as restricting, but merely as examples.

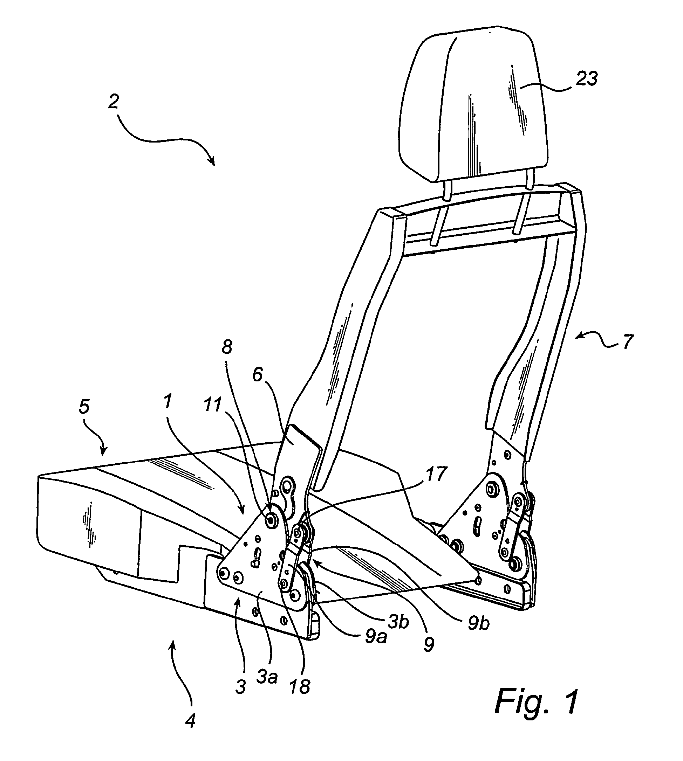

Fig. 1 shows a back support mechanism 1 according to a first embodiment of the invention. The mechanism is mounted in a vehicle seat 2 between a squab 5 of the seat, or a frame 4 supporting the squab 5, and a back-rest 7 of the seat 2. The mechanism may be mounted in a seat, preferably adapted for one occupant, which seat forms part of a row of seats, for instance a second and/or a third row of seats in a vehicle, such as a sport utility vehicle, a minibus or similar vehicles.

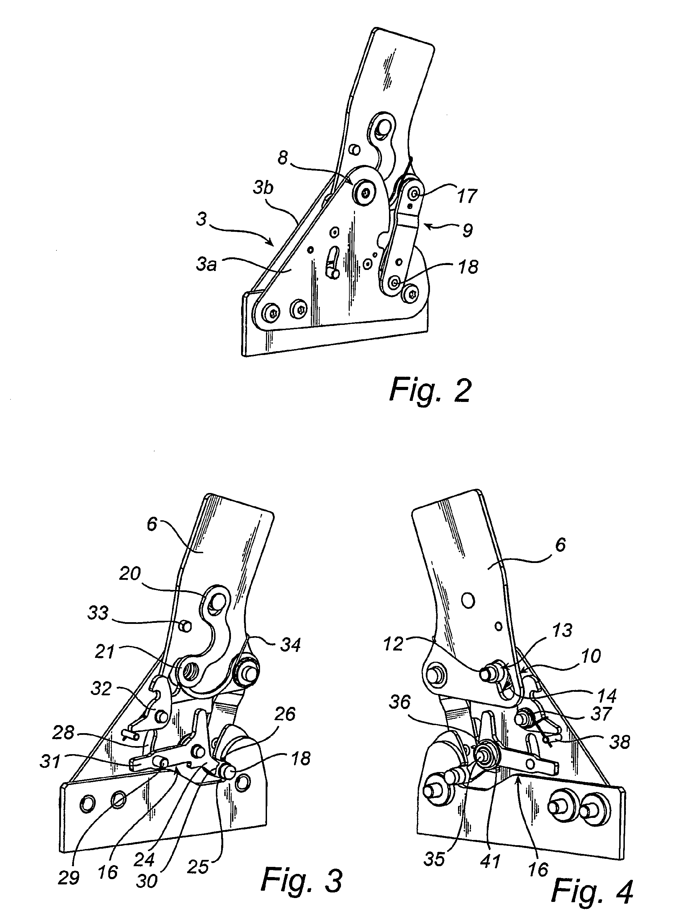

The mechanism has a support plate 3, which according to the first embodiment, as illustrated in fig. 1, comprises a front support plate 3a and a rear corresponding support plate 3b (in the following principally referred to number 3). The support plates are attached and connected to the vehicle by suitable attachment means. The support plates 3 are further connected to a mounting plate 6 via a shaft 11, as a pivotal interconnection 8 for defining the pivot axis about which the back-rest may pivot in ordinary use, in a retained condition. The mounting plate 6 is provided with a control element 9, in this embodiment two corresponding link arms 9a, 9b, which control element 9 is pivotally attached, forming a first and upper pivotal joint 17. The elongate control element 9 is also pivotally attached and selectively releasable to the support plates 3, forming a second and lower pivotal joint 18, see fig. 2.

As illustrated in fig. 3, the support plates 3 are provided with a recess 25, each plate respectively, for receiving an engagement element 26 arranged at the lower pivotal joint 18 of said control element 9. The engagement element 26 has in this particular embodiment a cylindrical shape which element bridges the two link arms 9a, 9b at the lower pivotal joint 18.

The engagement element 26 are held in position in said recess 25 by a locking arm 24, see fig. 3. The free end of the locking arm exhibits a circumferential groove 30, such as a concave surface, to encircle a corresponding circumference of said cylindrical engagement element 26.

The locking arm 24 is a part of a release means 16 which is turnably connected to the support plate. The support plate 3 is provided with an operating slot 28 adapted to guide and restrain the turning of an operating arm 31 of the essentially T-shaped release means 16. There being an operating pin 29 arranged on said operating arm which pin is manoeuvrable in said operating slot 28.

The operating arm 29 is operatively associated with a hook-shaped catch 32 which is tiltably arranged at the support plate. The catch 32 is adapted to receive a bolt 33, arranged at the mounting plate 6, in a tilted essentially horizontal position, described below.

A deformable element 15 (energy absorbing element) is provided, with an upper end 20 attached to the mounting plate 6 and a lower end 21 attached to the shaft 11. The deformable element is preferably a plastically extensible deformable element which is arc-shaped. As seen in fig. 3, the opening of the upper end 20 of the deformable element is preferably formed as a longitudinal groove or as a key hole to facilitate the mounting of the deformable element, wherein only one fastening means of the lower end 21, needs to be detached, for performing a substitution of the energy absorbing element.

A S-shaped yielding element 19 extends between the shaft 11 and the upper pivotal joint 17 which is adapted to yield when submitted to a predetermined force essentially aligned with the yielding elements attachment points at 11 and 17. The yielding element is preferably biasing the shaft 11 into the initial retaining section 12. The mounting plate 6, at the upper pivotal joint 17 has a control spring 34 arranged for applying a spring force to the control element 9 (in a clockwise direction in fig. 3).

The release means 16 is turnably arranged to the support plate 3 by an attachment joint 35, see fig. 4. A manoeuvre spring 36 is arranged at said attachment joint 35 for applying a spring force to the release means 16 (in a clockwise direction in fig. 4) and preferably also a force for bringing the locking arm 24 together with the engagement element 26 for reducing the play.

By providing a tilt spring 37 at the hook-shaped catch 32, a spring force can be applied to the catch (in a clockwise direction in fig. 4). The catch movement is restricted by a stop lug 38 arranged at the support plate 3.

The mounting plate 6 exhibits a L-shaped guide aperture 10, see fig. 4, which, according to this embodiment, more precisely is an inverted L-shaped slot or groove. The guide aperture 10 is provided with an initial rearmost retaining section 12 which is only inclined slightly from the horizontal, the initial retaining section 12 being connected to a second and upper elongate section 13 for performing a short safety translation movement rearwards (explain in detail below). The short second elongate section 13, forms the L-shape by means of, being connected to a somewhat longer third elongate section 14 (safety pivotal section) which extends downwardly and slightly forwardly (seen from a seat occupant perspective).

As mentioned above, in ordinary use of the seat and back rest, the shaft 11 defines the pivot axis for tilting the back-rest, when the shaft is retained in the initial retaining section 12. The essentially horizontal initial retaining section 12 and the connected upper elongate section 13 may be straight or may have at least one curved or arc shaped edge to reduce the risk of the shaft 11 becoming jammed or otherwise held in the sections 12, 13 by friction, when the shaft is leaving the retaining section, in a rear impact situation.

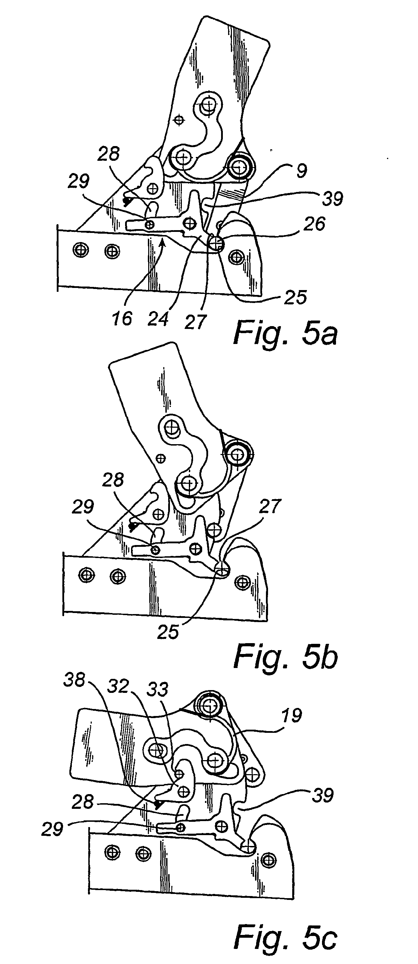

With reference to fig. 5a, 5b and 5c the back-rest tilting positions will be described in the following. Fig. 5a shows the seat in ordinary use, in a predetermined upright back-rest position. However, it should be noted that the mechanism may comprise additional substantially upright back-rest positions. The engagement element 26 of the control element 9 is locked by the locking arm 24 of the release means 16 in a fix position. The locking arm 24 obstructs an orifice 27 of said recess 25 to withhold the engagement element 26 in the upright position. The circumferential of the support plate 3 exhibits a notch 39 (see fig. 5a) for a predetermined easy-entry position.

When the operating pin 29 is manoeuvred upwards in said operating slot 28, the back-rest 7 with the associated engagement element may be tilted forwardly about the pivotal interconnection 8, wherein the engagement element may be brought out of the recess 25. It is to be understood that the operating pin preferably has an uppermost manoeuvre position in the operating slot 28 and maybe also an easy entry manoeuvre position situated slightly below the upper most section in the slot. Alternatively and preferably the pin may be temporarily manoeuvred upwards only as long as the engagement element 35 is brought out of the recess 25 and wherein the operating pin is manoeuvrably released and forced downwards again by the biasing force from the manoeuvre spring 35.

When the engagement element 26 is released in the recess 25, the control spring is biasing the control element to abut the engagement element against the circumference of the support plate 3. Thus, the engagement element 26 preferably follows the surface boundary of the support plate 3 as the back-rest is being tilted forwardly. Eventually the engagement element 26 will enter the notch 39 in the easy-entry position, as shown in fig. 5b. Thus the notch 39 is adapted to receive and secure the control element 9. However, it should be noted that the mechanism may comprise additional positions, similar to the easy-entry position.

If the operating pin 29 is manoeuvred and held in the uppermost position in the operating slot 28 the back-rest can be tilted past the easy entry-position (described in detail below) to a further predetermined position, in this specific embodiment, a tilted essentially horizontal position, see fig. 5c. The mounting plate and back-rest is secured by the hook shaped catch 32. The catch receives the bolt 33. The catch and in some situations also the stop log 38 relieves the yielding element 19 for occurring loads and tensions in the tilted flat position, for instance if the back-rest is submitted to forces in the tilted position. However, it should be noted that the mechanism may comprise additional positions, similar to the tilted essentially horizontal position.

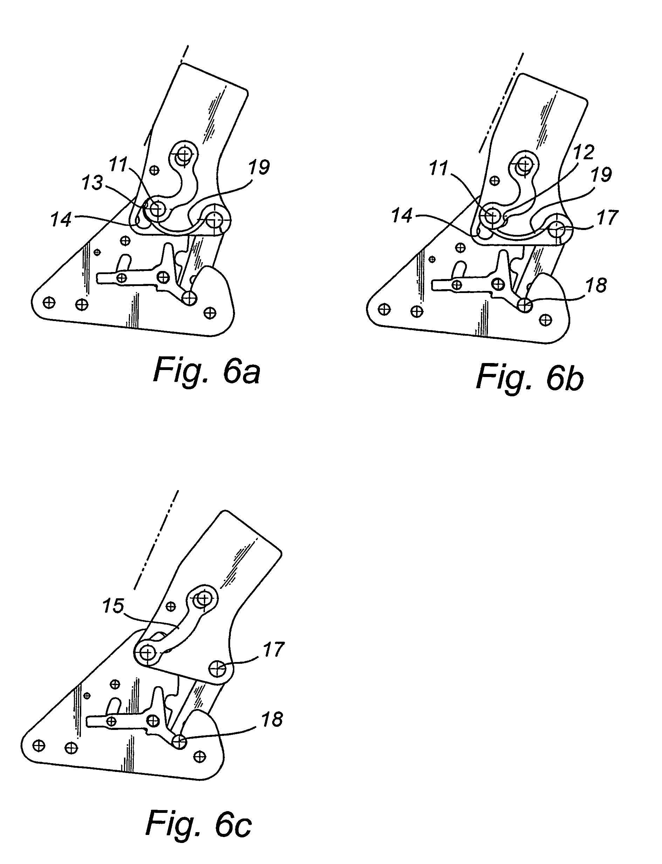

With reference to fig. 6a, 6b and 6c the function of the mechanism will be described in the following, in a rear impact situation. Fig. 6a shows the seat in ordinary use - in the retained condition, in the earlier described essentially upright back-rest position, which position is indicated by a dash dotted line in 6a, 6b and 6c. Should a vehicle in which a seat 2 is mounted be involved in a rear impact, whilst the seat is occupied by an occupant, the inertia will cause the buttocks of the occupant to impart a substantial generally rearwardly directed initial force to the lower part of the back-rest of the seat. The force will be such that at least the lower-most part of the back-rest will move rearwardly, and the S-shaped yielding element 19 will yield and be deformed. The mechanism 1 may be fitted with a frangible pin (not shown) to indicate when the shaft has left the initial retaining section.

Thus the back-rest and the upper part of the control element moves rearwardly relatively to the shaft 11, from the initial retaining section (see fig. 6a) and along the upper elongate section 13 (see fig. 6b), bringing the shaft 11 into alignment with the generally downwardly directed elongate section 14 of the guide aperture 10.

The back-rest may then, in response to a continuing force applied by the torso of the occupant, move in such a way that the upper pivotal joint 17 of the control element 9 will execute a rearward arcuate movement about the axis of the lower pivotal joint 18, see fig. 6c. As the back-rest executes this rearward pivoting movement, effectively the back-rest becomes slightly elevated as the shaft 11 relatively moves down the generally vertical section 14, with a resultant deformable extension of the energy absorbing element 15. Thus energy is absorbed as the extendable element 15 deforms.

It is to be understood that in a rear impact situation, rearward movement of at least the lower part of the back rest (when the shaft 11 moves relative to the generally horizontal section 13), during which the yielding element is deformed to absorb slight amount of energy, the back-rest executes the essentially rearward motion. After the rearward motion of the back-rest the shaft 11 effectively travels down the vertical elongate section 14 causing energy to be absorbed by the elongation of the deformable element 15. The energy absorbed in this second movement of the back-rest is much greater than the energy absorbed in the initial movement of the back-rest. Thus the inertial energy of the occupant is gradually absorbed, minimising the risk of injury.

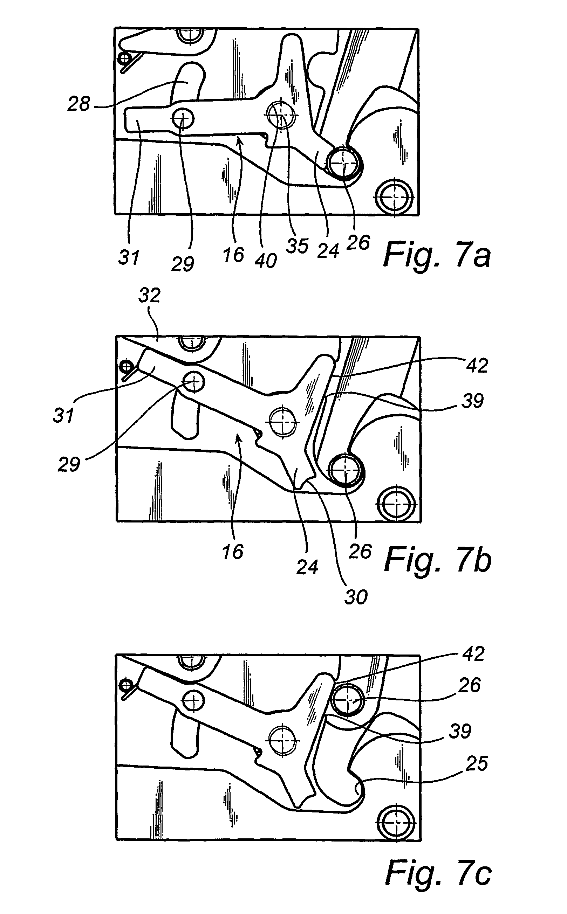

Fig. 7a, 7b, and 7c shows the release means 16 in different manoeuvring positions. Fig. 7a also shows how the play (also referred to as positive allowance) is reduced in the mechanism at least in the essentially upright back-rest position. The release means 16 has, at the attachment joint 35, a displacement slot 40 preferably having a longitudinal form along a first direction and a second direction essentially corresponding to the axle diameter of the attachment joint 35, see fig. 7a. The displacement slot 40 is adapted to displace the locking arm 24 in said first direction towards and away the engagement element 26 of the control element 9 in the shown position. As seen in fig. 4, the attachment joint 35 is encircled by bearing means 41, for instance a spacer. The manoeuvre spring 36, which in this embodiment is a helical spring, is circumferentially arranged around the bearing means 41. Thus, the release means is displaceable in the direction of its slot 40 with a minimum play. As mentioned above the manoeuvre spring 36 is biasing the locking arm 24 towards the engagement element 26 which reduces the play. The form of the operating slot 28, at the lower limiting surface, restrains the movement and the play of the locking arm 24 in the position shown in fig. 7a. The operating slot 28, the displacement slot 40 and the recess 25 restrains undesired movements of the locking arm 24. The form and curvature of the recess 25 determines the required force for releasing the engagement element 26. The angle of clearance, defined in relation to the normal of the contact surface between the engagement element 26 and the support plate 3, may preferably have an angle of at least 5,7° (arctan 0,1) and may have a related coefficient of friction of approximately 0,1.

As the operating pin 29 is brought upwards the locking arm 24 is brought out of contact with the engagement element both laterally of the recess 25 but also longitudinally because of the displacement slot 40.

The operating pin 29 is brought to the uppermost position in the operating slot 28 in Fig. 7b. It should be understood that the operating arm 31 affects the hook shaped catch 32 in this position. In fig. 7b the notch 39, for the easy entry position, is at least partly blocked by a hindering surface 42 of the release means 16. Thus, the engagement element 35 is hindered to enter the easy-entry position, see fig. 7c. The engagement element 35 of the control element will follow the outer boundary of the support plate 3 and release means 16 during a back-rest tilting motion. Eventually the bolt 33 will be secured in the tilted essentially horizontal position by the hook shaped catch 32, as shown in fig. 5c.

It should be noted that different modifications of the embodiment of the invention described above are feasible within the scope of the invention, as its is defined by the following claims. For example the mechanism may be adapted for additional tilting positions, such as tilting the back-rest backwards, wherein the back-rest is essentially aligned with the squab. Also the mechanism may be adapted for a seat suitable for a plurality of occupants, such as a double seat, a triple seat and/or a tiltable row of seats. Such mechanism may comprise a compensating means and/or a synchronising means for compensation and synchronisation of varying loads and uneven loads subjected to the mechanism. Additionally the mechanism and squab may be fitted with additional release means for releasing the seat, for instance for temporarily storage of a seat or a row of seats. Further the back support mechanism may be associated to a head-rest moving mechanism (not shown) for moving the head-rest (23) of the seat (2) in response to a motion of the mounting plate (6). Preferably the head-rest moving mechanism is adapted to move the head-rest (23) forwardly at a rear impact. The mechanism may comprise supports, formed as arcuate guides, in a guide block so that axial movement of the supports causes the head rest to move upwardly and forwardly relative to the back-rest of the seat.

## Claims

1. A back support mechanism (1) for a vehicle seat, comprising,
a support plate (3) formed by part of or to be attached to a frame supporting a squab of the seat,
a mounting plate (6) formed by part of or to be attached to a back-rest of the seat,
and at least one pivotal interconnection (8) for enabling the mounting plate (6) to pivot relative to the support plate (3), and thereby tilting the back-rest relative to the squab
said mechanism further comprising,
a control element (9) for controlling the pivoting relation between the support plate (3) and the mounting plate (6),
wherein the control element (9) is adapted to allow the mounting plate (6) to reach at least one upright back-rest position and at least a first and secondpredetermined tilted back-rest position, **characterised in that**, one of said support plate (3) and the mounting plate (6) defines a guide aperture (10) for receiving a shaft (11) attached to the other one of said mounting plate (6) and the support plate (3), to permit relative movement of the shaft along the guide aperture when subjected to a predetermined force, from an initial retaining section (12) of said aperture to at least one elongate section (14; 13) for performing a safety pivoting movement of the back-rest, and an energy absorbing element (15) is adapted to absorb energy at least along a part of the guide aperture during said movement in the aperture (10).

2. A mechanism according to claim 1, wherein said control element (9) is releasable from one of said plates (3; 6) by a release means (16) for enabling said control element to reach said first tilted back-rest position, such as an easy-entry position and said second tilted back-rest position, such as a tilted essentially horizontal position.

3. A mechanism according to claim 1 or 2, wherein said control element is a link arm (9) having a first (17) and a second (18) pivoting joint.

4. A mechanism according to claim 3, wherein said pivotal interconnection (8) and said first joint (17) is mutually spaced and arranged in an essentially lateral direction to the link arm (9) extent.

5. A mechanism according to any one of claims 1-4, wherein the support plate (3) and the mounting plate (6) are adapted to be secured in its pivoting relation at least in said first tilted back-rest position.

6. A mechanism according to any one of claims 1-5, wherein said control element (9) is adapted to be secured at least in said first tilted back-rest position.

7. A mechanism according to any one of claims 1-6, said mechanism further comprises a yielding element (19) to retain the shaft (11) within the initial retaining section (12) of the guide aperture (10) to prevent relative movement of the support plate (3) and the mounting plate (6), the yielding element being deformable when subjected to said predetermined force.

8. A mechanism according to claim 7, wherein said yielding element (19) is a frangible element.

9. A mechanism according to claim 7, wherein said yielding element is a resilient element (19).

10. A mechanism according to any one of claims 1-9, wherein said energy absorbing element is a deformable element (15), having opposite ends (20, 21), each of the opposite ends of the element being connected to a respective one of said plates (3, 6).

11. A mechanism according to claim 10, wherein the opposite ends (20, 21) of said deformable element being adapted to be moved apart one another, with a remaining elongation of said deformable element.

12. A mechanism according to any one of claims 1-11, wherein said support plate (3) carrying said pivotal interconnection (8) which comprises said shaft (11), as a main pivot shaft.

13. A mechanism according to any one of claims 7-12, associated with a head-rest moving mechanism to move the head-rest (23) of the seat (2) in response to a motion of the mounting plate (6) relative to the support plate (3) sufficient to cause deformation of the yielding element (19), or sufficient to cause the energy absorbing element (15) to absorb energy.

14. A mechanism according to any one of claims 2-13, wherein said release means (16) comprises a locking arm (24) for locking the control element (9) in said upright back-rest position.

15. A mechanism according to any one of claims 2-14, wherein said support plate (3) comprises a recess (25) adapted for receiving an engagement element (26) of said control element for locking the control element in said upright back-rest position.

16. A mechanism according to claim 15 when dependant on claim 14, wherein said locking arm (24) is adapted to at least partly obstruct an orifice (27) of said recess (25), when said engagement element (26) is received in said recess (25).

17. A mechanism according to claim 16, wherein said locking arm (24) is arranged to be moved laterally of the orifice of said recess (25) for releasing said control element (9).

18. A mechanism according to any one of claims 14-17, wherein said locking arm (24) is tiltably arranged, having at least one eccentric position for locking and releasing the control element (9) in said upright back-rest position.

19. A mechanism according to claim 18, wherein said locking arm (24) is tiltably arranged by means of a spring action for reducing the play when the control element is locked in said upright back-rest position.

20. A mechanism according to claim 1, wherein said aperture further comprising a second elongate section (13) for permitting relative movement between said plates for moving the back-rest rearwardly relative to the squab.

21. A mechanism according to claim 20, wherein said predetermined force is corresponding to a predetermined amount of energy to permit the shaft to move in said initial retaining section, wherein said energy absorbing element being configured to absorb a substantially greater amount of energy during the subsequent rearward pivotal movement of the back-rest.

## Patentansprüche

1. Rückenstützenmechanismus (1) für einen Fahrzeugsitz, welcher umfasst:
eine Stützplatte (3), die von einem Teil eines ein Polster des Sitzes tragenden Rahmens gebildet wird oder an einem solchen Rahmen zu befestigen ist,
eine Montageplatte (6), die von einem Teil einer Rückenlehne des Sitzes gebildet wird oder an einer solchen zu befestigen ist,
und mindestens eine Schwenkverbindung (8), um zu ermöglichen, dass die Montageplatte (6) bezüglich der Stützplatte (3) schwenkt, und dadurch die Rückenlehne bezüglich des Polsters zu neigen,
wobei der Mechanismus ferner umfasst:
ein Steuerelement (9) zum Steuern der Schwenkbeziehung zwischen der Stützplatte (3) und der Montageplatte (6),
wobei das Steuerelement (9) dazu eingerichtet ist zu ermöglichen, dass die Montageplatte (6) mindestens eine aufrechte Rückenlehnenposition und mindestens eine erste und zweite vorbestimmte geneigte Rückenlehnenposition erreicht,
**dadurch gekennzeichnet, dass**
eine von der Stützplatte (3) und der Montageplatte (6) eine Führungsöffnung (10) zum Aufnehmen einer Welle (11), die an der anderen von der Montageplatte (6) und der Stützplatte (3) befestigt ist, definiert, um eine relative Bewegung der Welle, wenn eine vorbestimmte Kraft auf sie ausgeübt wird, entlang der Führungsöffnung aus einem Anfangs-Halteabschnitt (12) der Öffnung zu mindestens einem langgestreckten Abschnitt (14; 13) zum Ausführen einer Sicherheits-Schwenkbewegung der Rückenlehne zu ermöglichen,
und ein Energie absorbierendes Element (15) dazu eingerichtet ist, wenigstens entlang eines Teils der Führungsöffnung während der Bewegung in der Öffnung (10) Energie zu absorbieren.

2. Mechanismus nach Anspruch 1, wobei das Steuerelement (9) durch ein Lösemittel (16) von einer der Platten (3; 6) lösbar ist, um zu ermöglichen, dass das Steuerelement die erste geneigte Rückenlehnenposition, wie etwa eine Einstiegshilfeposition (Easy-Entry-Position), und die zweite geneigte Rückenlehnenposition, wie etwa eine geneigte, im Wesentlichen horizontale Position, erreicht.

3. Mechanismus nach einem der Ansprüche 1 oder 2, wobei das Steuerelement ein Gelenkarm (9) ist, der ein erstes (17) und ein zweites (18) Schwenkgelenk aufweist.

4. Mechanismus nach Anspruch 3, wobei die Schwenkverbindung (8) und das erste Gelenk (17) voneinander beabstandet und in einer im Wesentlichen seitlichen Richtung zu der Erstreckung des Gelenkarms (9) angeordnet sind.

5. Mechanismus nach einem der Ansprüche 1-4, wobei die Stützplatte (3) und die Montageplatte (6) dazu eingerichtet sind, in ihrer Schwenkbeziehung mindestens in der ersten geneigten Rückenlehnenposition gesichert zu werden.

6. Mechanismus nach einem der Ansprüche 1-5, wobei das Steuerelement (9) dazu eingerichtet ist, mindestens in der ersten geneigten Rückenlehnenposition gesichert zu werden.

7. Mechanismus nach einem der Ansprüche 1-6, wobei der Mechanismus ferner ein nachgiebiges Element (19) umfasst, um die Welle (11) innerhalb des Anfangs-Halteabschnitts (12) der Führungsöffnung (10) zu halten, um eine relative Bewegung der Stützplatte (3) und der Montageplatte (6) zu verhindern, wobei das nachgiebige Element verformbar ist, wenn es der Einwirkung der vorbestimmten Kraft ausgesetzt ist.

8. Mechanismus nach Anspruch 7, wobei das nachgiebige Element (19) ein brechbares Element ist.

9. Mechanismus nach Anspruch 7, wobei das nachgiebige Element (19) ein elastisches Element ist.

10. Mechanismus nach einem der Ansprüche 1-9, wobei das Energie absorbierende Element ein verformbares Element (15) ist, das gegenüberliegende Enden (20, 21) aufweist, wobei jedes der gegenüberliegenden Enden mit einer jeweiligen der Platten (3, 6) verbunden ist.

11. Mechanismus nach Anspruch 10, wobei die gegenüberliegenden Enden (20, 21) des verformbaren Elements dazu eingerichtet sind, voneinander weg bewegt zu werden, mit einer bleibenden Dehnung des verformbaren Elements.

12. Mechanismus nach einem der Ansprüche 1-11, wobei die Stützplatte (3) die Schwenkverbindung (8) trägt, welche die Welle (11) als eine Hauptschwenkwelle umfasst.

13. Mechanismus nach einem der Ansprüche 7-12, der mit einem Kopfstützen-Bewegungsmechanismus in Verbindung steht, um die Kopfstütze (23) des Sitzes (2) in Reaktion auf eine Bewegung der Montageplatte (6) relativ zu der Stützplatte (3) zu bewegen, die ausreichend ist, um eine Verformung des nachgiebigen Elements (19) zu verursachen, oder ausreichend ist, um zu bewirken, dass das Energie absorbierende Element (15) Energie absorbiert.

14. Mechanismus nach einem der Ansprüche 2-13, wobei das Lösemittel (16) einen Verriegelungsarm (24) zum Verriegeln des Steuerelements (9) in der aufrechten Rückenlehnenposition umfasst.

15. Mechanismus nach einem der Ansprüche 2-14, wobei die Stützplatte (3) eine Aussparung (25) umfasst, die dazu eingerichtet ist, ein Eingriffselement (26) des Steuerelements aufzunehmen, um das Steuerelement in der aufrechten Rückenlehnenposition zu verriegeln.

16. Mechanismus nach Anspruch 15, wenn abhängig von Anspruch 14, wobei der Verriegelungsarm (24) dazu eingerichtet ist, eine Öffnung (27) der Aussparung (25) wenigstens teilweise zu versperren, wenn das Eingriffselement (26) in der Aussparung (25) aufgenommen ist.

17. Mechanismus nach Anspruch 16, wobei der Verriegelungsarm (24) dazu eingerichtet ist, seitlich aus der Öffnung der Aussparung (25) bewegt zu werden, um das Steuerelement (9) freizugeben.

18. Mechanismus nach einem der Ansprüche 14-17, wobei der Verriegelungsarm (24) neigbar angeordnet ist, wobei er mindestens eine exzentrische Position zum Verriegeln und Freigeben des Steuerelements (9) in der aufrechten Rückenlehnenposition aufweist.

19. Mechanismus nach Anspruch 18, wobei der Verriegelungsarm (24) mittels einer Federwirkung neigbar angeordnet ist, um das Spiel zu verringern, wenn das Steuerelement in der aufrechten Rückenlehnenposition verriegelt ist.

20. Mechanismus nach Anspruch 1, wobei die Öffnung ferner einen zweiten langgestreckten Abschnitt (13) umfasst, um eine relative Bewegung zwischen den Platten zum Rückwärtsbewegen der Rückenlehne bezüglich des Polsters zu ermöglichen.

21. Mechanismus nach Anspruch 20, wobei die vorbestimmte Kraft einer vorbestimmten Energiemenge entspricht, um der Welle zu ermöglichen, sich in den Anfangs-Halteabschnitt zu bewegen, wobei das Energie absorbierende Element dafür ausgebildet ist, eine erheblich größere Energiemenge während der anschließenden Rückwärtsschwenkbewegung der Rückenlehne zu absorbieren.

## Revendications

1. Mécanisme de soutien du dos (1) pour siège de véhicule, comprenant,
une plaque de soutien (3) formée par une partie de ou à fixer a un châssis soutenant un dossier du siège,
une plaque de montage (6) formée par une partie de ou à fixer sur un appui-dos du siège,
et au moins une interconnexion pivotante (8) pour permettre à la plaque de montage (6) de pivoter par rapport à la plaque de soutien (3), et ainsi incliner l'appui-dos par rapport au dossier,
ledit mécanisme comprenant en outre,
un élément de commande (9) pour commander la relation de pivotement entre la plaque de soutien (3) et e plaque de montage (6),
l'élément de commande (9) est adapté pour permettre à la plaque de montage (6) d'atteindre au moins une position d'appui-dos verticale et au moins une première et une seconde position d'appui-dos incliné prédéterminée,
**caractérisé en ce que**
une de ladite plaque de soutien (3) et ladite plaque de montage (6) définit une ouverture de guidage (10) pour recevoir un arbre (11) fixe à l'autre plaque de ladite plaque de montage (6) et ladite plaque de soutien (3), pour permettre un mouvement relatif de l'arbre le long de l'ouverture de guidage quand il est soumis à une force prédéterminée, à partir d'une section de retenue initiale (12) de ladite ouverture vers au moins une section allongée (14 ; 13) pour effectuer un mouvement de pivotement de sécurité de l'appui-dos,
et dans lequel un élément absorbeur d'énergie (15) est adapté pour absorber l'énergie au moins le long d'une partie de l'ouverture de guidage pendant ledit mouvement dans l'ouverture (10).

2. Mécanisme selon la revendication 1, dans lequel ledit élément de commande (9) est déblocable à partir d'une desdites plaques (3 ; 6) par un moyen de déblocage (16) pour permettre audit élément de commande d'atteindre ladite première position d'appui-dos inclinée, comme une position « easy-entry » et ladite seconde position d'appui-dos inclinée, comme une position horizontale essentiellement inclinée.

3. Mécanisme selon les revendications 1 ou 2, dans lequel ledit élément de commande est un bras de liaison (9) ayant un premier (17) et un second (18) joint pivotant.

4. Mécanisme selon la revendication 3, dans lequel ladite interconnexion pivotante (8) et ledit premier joint (17) sont mutuellement espacés et agencés dans une direction essentiellement latérale à l'extension du bras de liaison (9).

5. Mécanisme selon une quelconque des revendications 1 à 4, dans lequel la plaque de soutien (3) et la plaque de montage (6) sont adaptées pour être fixées dans leur relation de pivotement au moins dans ladite première position d'appui-dos inclinée.

6. Mécanisme selon une quelconque des revendications 1 à 5, dans lequel ledit élément de commande (9) est adapté pour être fixé au moins dans ladite première position d'appui-dos inclinée.

7. Mécanisme selon une quelconque des revendications 1 à 6, ledit mécanisme comprend en outre un élément suspendu (19) pour retenir l'arbre (11) à l'intérieur de la section de retenue initiale (12) de l'ouverture de guidage (10) pour empêcher un mouvement relatif de la plaque de soutien (3) et de la plaque de montage (6), l'élément suspendu étant déformable quand il est soumis à ladite force prédéterminée.

8. Mécanisme selon la revendication 7, dans lequel ledit élément suspendu (19) est un élément désintégrable.

9. Mécanisme selon la revendication 7, dans lequel ledit élément suspendu est un élément résilient (19).

10. Mécanisme selon une quelconque des revendications 1 à 9, dans lequel ledit élément absorbeur d'énergie est un élément déformable(15), ayant des extrémités opposées (20, 21), chacune des extrémités opposées de l'élément étant raccordée à une plaque respective desdites plaques (3, 6).

11. Mécanisme selon la revendication 10, dans lequel les extrémités opposées (20, 21) dudit élément déformable sont adaptées pour être éloignées l'une de l'autre, avec un allongement restant dudit élément déformable.

12. Mécanisme selon une quelconque des revendications 1 à 11, dans lequel ladite plaque de soutien (3) supporte ladite interconnexion pivotante (8) qui comprend ledit arbre (11), comme un arbre de pivot principal.

13. Mécanisme selon une quelconque des revendications 7 à 12, associe à un mécanisme de déplacement d'appui-tête pour déplacer l'appui-tête (23) du siège (2) en réponse à un mouvement de la plaque de montage (6) par rapport à la plaque de soutien (3) suffisant pour provoquer une déformation de l'élément suspendu (19), ou suffisant pour amener l'élément absorbeur d'énergie (15) a absorber l'énergie.

14. Mécanisme selon une quelconque des revendications 2 à 13, dans lequel ledit moyen de déblocage (16) comprend un bras de verrouillage (24) pour verrouiller l'élément de commande (9) dans ladite position d'appui-dos verticale.

15. Mécanisme selon une quelconque des revendications 2 à 14, dans lequel ladite plaque de soutien (3) comprend un évidement (25) adapte pour recevoir un élément de mise en prise (26) dudit élément de commande pour verrouiller l'élément de commande dans ladite position d'appui-dos verticale.

16. Mécanisme selon la revendication 15 en dépendance de la revendication 14, dans lequel ledit bras de verrouillage (24) est adapté pour obstruer au moins partiellement un orifice (27) dudit évidement (25), quand ledit élément de mise en prise (26) est reçu dans ledit évidement (25).

17. Mécanisme selon la revendication 16, dans lequel ledit bras de verrouillage (24) est agence pour être déplacé latéralement de l'orifice dudit évidement (25) pour débloquer ledit élément de commande (9).

18. Mécanisme selon une quelconque des revendications 14 à 17, dans lequel ledit bras de verrouillage (24) est agence de manière inclinable, ayant au moins une position excentrique pour verrouiller et débloquer l'élément de commande (9) dans ladite position d'appui-dos verticale.

19. Mécanisme selon la revendication 18, dans lequel ledit bras de verrouillage (24) est agence de manière inclinable au moyen d'une action de ressort pour réduire le jeu quand l'élément de commande est verrouillé dans ladite position d'appui-dos verticale.

20. Mécanisme selon la revendication 1, dans lequel ladite ouverture comprend en outre une seconde section allongée (13) pour permettre un mouvement relatif entre lesdites plaques pour déplacer l'appui-dos vers l'arrière par rapport au dossier.

21. Mécanisme selon la revendication 20, dans lequel ladite force prédéterminée est correspondante a une quantité prédéterminée d'énergie pour permettre à l'arbre de se déplacer dans ladite section de retenue initiale, dans lequel ledit élément absorbeur d'énergie est configuré pour absorber une quantité substantiellement plus grande d'énergie pendant le mouvement pivotant vers l'arrière subséquent de l'appui-dos.
